# EUROPEAN PATENT APPLICATION

(11) **EP 4 659 566 A1**
(43) Date of publication of application: **10.12.2025**
(21) Application number: 24180554.8
(22) Date of filing: 06.06.2024
(51) Int. Cl.: A01G 9/22

(54) **A GREENHOUSE**

(71) Applicant: Alumat Zeeman B.V., 2676 LS Maasdijk (NL)
(72) Inventor: VAN MARKWIJK, Ronald Wilhelmus, 2685 SJ Poeldijk (NL); BAHLMANN, Job Ole Ióannèn, 2645 BD Delfgauw (NL)
(74) Representative: De Vries & Metman

(57) **Abstract**

A greenhouse (1) comprises an upright planar truss (6) and a beam (11) for cooperating with a screen of a screen installation inside the greenhouse (1). The truss (6) spans a main plane and has an upper bar (8), a lower bar (9) and at least two diagonal webs (10) which interconnect the upper bar (8) and the lower bar (9). The beam (11) is mounted to the webs (10) and extends at a height level between the upper bar (8) and the lower bar (9). The beam (11) is mounted to the webs (10) through at least two separate mounting members (12) which are mounted to the beam (11) at a distance from each other in longitudinal direction of the beam (11) and rest on the at least two webs (10), respectively.

## Description

The present invention relates to a greenhouse, comprising an upright planar truss and a beam for cooperating with a screen of a screen installation inside the greenhouse, wherein the truss spans a main plane and has an upper bar, a lower bar and at least two diagonal webs which interconnect the upper bar and the lower bar, wherein the beam is mounted to the webs and extends at a height level between the upper bar and the lower bar.

Such a greenhouse is known in the prior art. The known greenhouse has a screen installation which comprises three screens which extend above each other. The upper and lower screens cooperate with the upper bar and the lower bar of the truss, respectively. The intermediate screen cooperates with the beam which is welded to the webs between the upper bar and the lower bar. The screens close off an inner part of the greenhouse from a part which is situated thereabove and which is for example in contact with air openings, such as windows, in the greenhouse. The screens are provided with respective screen bars through which the screens are closed and opened by moving the screen bars through cables to and away from the upper bar, the lower bar and the beam, respectively. The screens and the corresponding screen bars rest on the cables. The upper bar, the lower bar and the beam cooperate with the screens in that their screen bars abut against the upper bar, the lower bar and the beam when the screens are in the closed conditions. Fixing the beam to the webs in the known greenhouse appears to be a time-consuming process.

An object of the invention is to provide a greenhouse including a truss and a beam which can be quickly mounted to each other.

This object is accomplished with the greenhouse according to the invention which is characterized in that the beam is mounted to the webs through at least two mounting members which are mounted to the beam at a distance from each other in longitudinal direction of the beam and rest on the at least two webs, respectively.

The greenhouse according to the invention provides the opportunity to mount the at least two separate mounting members to the beam and subsequently hanging the beam on two webs of the truss through the mounting members, which can be performed relatively quickly.

The at least two webs may have different orientations, preferably opposite orientations. This means that the webs are angled with respect to each other. This structure minimizes the risk that they will move downwardly together with the beam due to gravity.

Preferably, the mounting members freely rest on the at least two webs, respectively, since this further facilitates the installation process. Freely resting means that the mounting members are not attached to the webs by other means than resting thereon by gravity.

The mounting members may be mounted to the beam through respective snap fittings, which also facilitates the installation process.

In an advantageous embodiment the mounting members are displaceable along the beam, since this provides the opportunity to vary the height level of the beam between the upper bar and the lower bar of the truss.

The mounting members may be rigid parts. They may be made of aluminium, for example.

The beam may be spaced from the webs in a direction perpendicular to the main plane.

The upper bar, the lower bar and the beam may extend parallel to each other.

In a particular embodiment the beam is a first beam which extends at a first side of the main plane and the greenhouse comprises a second beam which extends at a second side of the main plane, which is opposite to the first side, wherein the second beam is mounted to the webs through the at least two mounting members which are also mounted to the second beam at a distance from each other in longitudinal direction of the second beam. Hence, both the first and second beams are mounted to each other and to the truss by the separate common mounting members.

In an embodiment opposite end portions of each of the mounting members are mounted to the first and second beams and respective central portions of the mounting members between their opposite end portions rest on the at least two webs.

In an embodiment elongate flexible elements are mounted to the first and second beams in longitudinal direction thereof, which flexible elements touch each other between the first and second beams so as to close a space between the first and second beams. In the event that the beam cooperates with a screen bar of a screen installation it is advantageous to close the space between the first and second beams, as well, since such a space might form a local leakage of light and/or heat. The flexible elements may be located below the mounting members.

In practice, the flexible elements may comprise tubular bodies, respectively.

The first and second beams may be surrounded by a bracket for preventing the first and second beams from being displaced away from each other. The bracket may be a wire spring, which is well-known as such.

The first and second beams, the mounting members and the flexible elements may be mirror symmetrical with respect to the main plane.

The invention will hereafter be elucidated with reference to very schematic drawings showing an embodiment of the invention by way of example.
Fig. 1 is a perspective view of a part of an embodiment of a greenhouse according to the invention.
Fig. 2 is an enlarged view of a part of the greenhouse as shown in Fig. 1.
Fig. 3 is an enlarged view of a part of Fig. 2 which is indicated by III in Fig. 2.
Fig. 4 is an enlarged view of a part of Fig. 3 which is indicated by IV in Fig. 3.
Fig. 5 is cross-sectional view of the part as shown in Fig. 4.

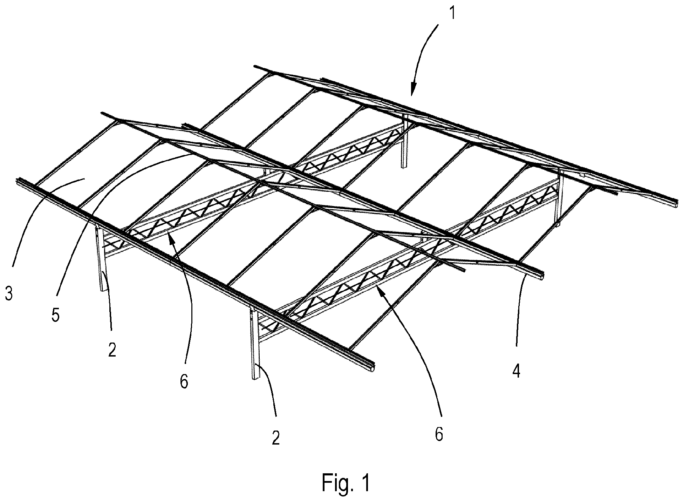

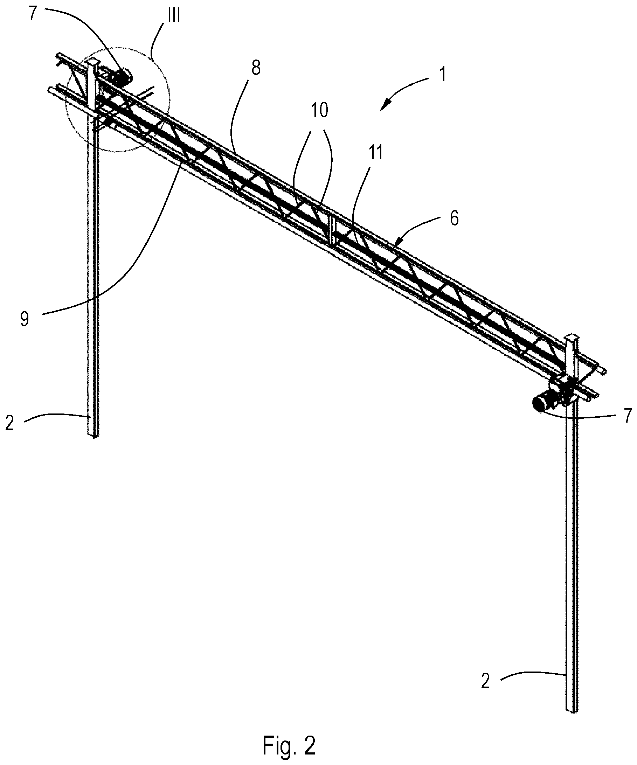

Fig. 1 shows a part of an embodiment of a greenhouse 1 according to the invention and Figs. 2-5 show further parts thereof in more detail. The greenhouse 1 comprises stanchions 2 which support a roof 3 of the greenhouse 1. The roof 3 comprises gutters 4 and ridges 5 which are arranged between the gutters 4 and extend parallel to the gutters 4. Upright planar trusses 6 are mounted to pairs of the stanchions 2. The trusses 6 extend perpendicular to the ridges 5 and the gutters 4.

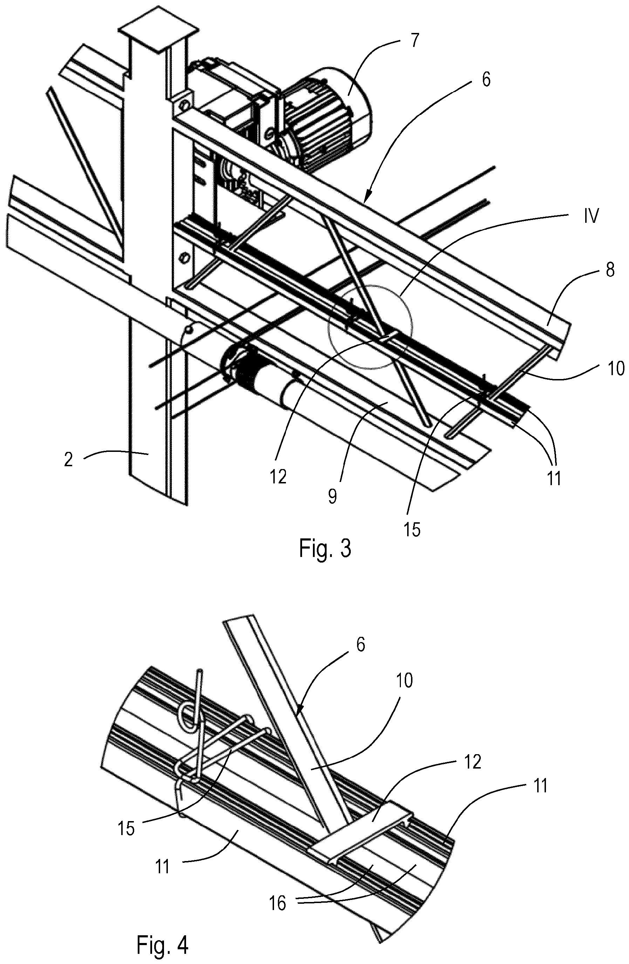

The greenhouse 1 may be provided with a screen installation comprising one screen, or two or three screens (not shown) which extend above each other and cooperate with the truss 6. The screens extend between a pair of trusses 6 that are located at a distance from each other in longitudinal direction of the ridges 5 and the gutters 4. Such screens are well-known as such. The screens can be opened to allow sun light to penetrate into the greenhouse 1. One or more of the screens can be closed in order to limit light penetration to plants inside the greenhouse so as to avoid overheating, for example. It is also possible that one or more of the screens are closed to limit light from the inner side of the greenhouse 1 to the environment during nights and/or to form an insulation layer during cold nights. Figs. 2 and 3 show that an upper screen (not shown) is located near an upper side of the truss 6 and a lower screen (not shown) is located near a lower side of the truss 6. The screens can be supported and driven by cables around shafts which in turn are driven by electric motors 7, respectively. The cables extend parallel to the gutters in a well-known manner and the screen rests on the cables. The screens may extend at opposite sides of each truss 6.

An end portion of the screen may be provided with a screen bar which is mounted to the cables and thus drivable by the corresponding electric motor 7 between the closed condition and an open condition. The screen bar may also rest on the cables. An opposite end portion of the screen at a distance from the screen bar may be fixed to a next truss 6 where the screen is collected, for example in a folded condition, in the open condition thereof. In the closed condition of the screen the screen bar may be close to the truss 6 or abut the truss 6. This minimizes a space between the screen bar and the truss 6.

Figs. 2-5 show one of the trusses 6 in more detail. Each truss 6 spans a main plane, in this case extending vertically. The truss 6 has an upper bar 8, a lower bar 9 and a series of diagonal webs 10 which interconnect the upper bar 8 and the lower bar 9. The webs 10, the upper bar 8 and the lower bar 9 may be aluminium or steel profiles which are fixed to each other through welding, for example.

Furthermore, each of the trusses 6 is provided with two beams in the form of elongate extruded aluminium profiles 11 which extend at opposite sides of the truss 6 at a height level between the upper bar 8 and the lower bar 9. The profiles 11 are parallel to the upper bar 8 and the lower bar 9. Each of the profiles 11 may cooperate with the above-mentioned screen installation. For example, the screen bars of screens at opposite sides of the truss 6 may abut against the profiles 11 when the screens are in the closed conditions. It is possible that the screen installation has three screens above each other which abut against the upper bar 8, the lower bar 9 and the profile 11, respectively, in their closed conditions. It is also possible that the screen installation has only two screens above each other wherein the screen bar of the upper screen abuts against the upper bar 8 and the screen bar of the lower screen abuts against the profile 11 in the closed conditions thereof. In the latter case the lower bar 9 may be used for supporting other devices in the greenhouse 1.

The profiles 11 are fixed to each other through mounting members in the form of rigid clips 12, see Figs 3-5. The clips 12 are mounted to the profiles 11 at a distance from each other in longitudinal direction of the profiles 11. Opposite end portions of each clip 12 are provided with downwardly directed protrusions 13 which are clamped in respective slots 14 in upper sides of the profiles 11 through respective snap fittings. The clips 12 keep the profiles 11 at a distance from each other and from the truss 6. In an alternative embodiment (not shown) additional clips 12 may also be clamped in respective slots in lower sides of the profiles 11 which are mirror symmetrical to the slots 14 in the upper sides of the profiles 11 relative to a horizontal plane. The profiles 11 are also kept together by brackets 15 which surround the profiles 11 so as to prevent the profiles 11 from being displaced away from each other.

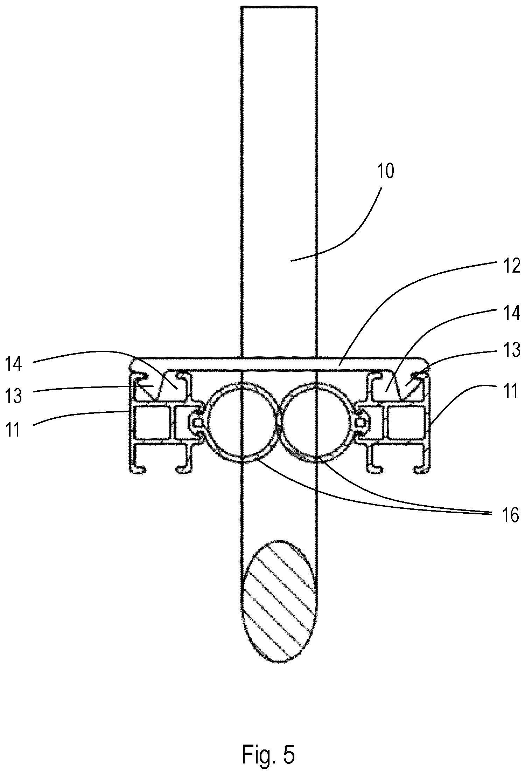

Each of the profiles 11 is provided with flexible elongate tubular bodies 16 that are fixed to sides of the profiles 11 which are directed to each other. Fig. 5 shows that the tubular bodies 16 touch each other at least between the webs 10, hence closing a space between the profiles 11. The tubular bodies 16 may be made of a relatively stiff rubber, for example. The brackets 15 may be wire springs which may clamp the profiles 11 to the webs 10 via the tubular bodies 16 in order to provide a proper closure between the profiles. The brackets 15 may be well-known wire springs which are provided with a loop through which the cables of the screen installation may be guided.

The profiles 11 are mounted to the truss 6 such that they suspend therefrom through the clips 12. Fig. 5 shows that central portions between opposite end portions of the respective clips 12 rest on the webs 10. The clips 12 may rest freely on the corresponding webs 10, which means that they are not fixed thereto. When the clips rest on two webs 10 which have opposite orientations the clips 12 can be automatically kept in their vertical positions. It is conceivable to apply more than two clips 12 for suspending the profiles 11 from more than two webs 10. In the event that the brackets 15 clamp the profiles 11 to the webs 10 via the tubular bodies 16, friction between the tubular bodies 16 and the webs may contribute to a supporting force of the webs 10 on the profiles 11.

In the embodiment as shown the clips 12 are displaceable along the profiles 11. This means that the height level of the profiles 11 can be varied with respect to the truss 6 by displacing the clips 12 along the profiles 11.

The tubular bodies 16 may be provided with recesses at the webs 10 such that the tubular bodies 16 are not deformed near the webs 10.

The invention is not limited to the embodiment shown in the drawings and described hereinbefore, which may be varied in different manners within the scope of the claims and their technical equivalents. For example, it is also possible that a screen is fixed to at least one of the upper bar, the lower bar and the beam such that a corresponding screen bar is located at a distance from the at least one of the upper bar, the lower bar and the beam.

## Claims

1. A greenhouse (1), comprising an upright planar truss (6) and a beam (11) for cooperating with a screen of a screen installation inside the greenhouse (1), wherein the truss (6) spans a main plane and has an upper bar (8), a lower bar (9) and at least two diagonal webs (10) which interconnect the upper bar (8) and the lower bar (9), wherein the beam (11) is mounted to the webs (10) and extends at a height level between the upper bar (8) and the lower bar (9), **characterized in that** the beam (11) is mounted to the webs (10) through at least two separate mounting members (12) which are mounted to the beam (11) at a distance from each other in longitudinal direction of the beam (11) and rest on the at least two webs (10), respectively.

2. A greenhouse (1) according to claim 1, wherein the at least two webs (10) have different orientations, preferably opposite orientations.

3. A greenhouse (1) according to claim 1 or 2, wherein the mounting members (12) freely rest on the at least two webs (10), respectively.

4. A greenhouse (1) according to any one of the preceding claims, wherein the mounting members (12) are mounted to the beam (11) through respective snap fittings.

5. A greenhouse (1) according to any one of the preceding claims, wherein the mounting members (12) are displaceable along the beam (11).

6. A greenhouse (1) according to any one of the preceding claims, wherein the mounting members (12) are rigid parts.

7. A greenhouse (1) according to any one of the preceding claims, wherein the beam (11) is spaced from the webs (10) in a direction perpendicular to the main plane.

8. A greenhouse (1) according to any one of the preceding claims, wherein the upper bar (8), the lower bar (9) and the beam (11) extend parallel to each other.

9. A greenhouse (1) according to any one of the preceding claims, wherein the beam is a first beam (11) which extends at a first side of the main plane and the greenhouse (1) comprises a second beam (11) which extends at a second side of the main plane, which is opposite to the first side, wherein the second beam (11) is mounted to the webs (10) through the at least two mounting members (12) which are also mounted to the second beam (11) at a distance from each other in longitudinal direction of the second beam (11).

10. A greenhouse (1) according to claim 9, wherein opposite end portions of each of the mounting members (12) are mounted to the first and second beams (11) and respective central portions of the mounting members (12) between their opposite end portions rest on the at least two webs (10).

11. A greenhouse (1) according to claim 9 or 10, wherein elongate flexible elements (16) are mounted to the first and second beams (11) in longitudinal direction thereof, which flexible elements (16) touch each other between the first and second beams (11) so as to close a space between the first and second beams (11).

12. A greenhouse (1) according to claim 11, wherein the flexible elements comprise tubular bodies (16), respectively.

13. A greenhouse (1) according to any one of the claims 9-12, wherein the first and second beams (11) are surrounded by a bracket (15) for preventing the first and second beams (11) from being displaced away from each other.

14. A greenhouse (1) according to any one of the claims 9-13, wherein the first and second beams (11), the mounting members (12) and the flexible elements (16) are mirror symmetrical with respect to the main plane.
